# EUROPEAN PATENT APPLICATION

(11) **EP 3 514 060 A1**
(43) Date of publication of application: **24.07.2019**
(21) Application number: 16909444.8
(22) Date of filing: 18.07.2016
(51) Int. Cl.: B64C 39/02, B64D 3/00, B64D 5/00

(54) **RPA (REMOTELY PILOTED AIRCRAFT) NEUTRALISING DEVICE**

(71) Applicant: Álvarez Villanueva, Pablo José, 28691 Villanueva de la Cañada (Madrid) (ES)
(72) Inventor: Álvarez Villanueva, Pablo José, 28691 Villanueva de la Cañada (Madrid) (ES)
(86) International application number: PCT/ES2016/000078
(87) International publication number: WO 2018/015576

(57) **Abstract**

The invention of the RPA Neutralizer Device (Remotely Piloted Aircraft) aims to provide the neutralization of RPA (threat) aircraft by means of a trapping, collection and immobilization device connected to another RPA (neutralizer) in its ventral part, to release it in a pre-established place.

The main objective of the invention is to trap synthetic / natural fibers, without exceeding the elastic limit, in the propellers of the RPA and to be neutralized by holding the trapped drone to prevent damage to third parties.

The preferred manufacture of the invention will be with composite materials, mainly carbon fiber and Kevlar 49.

## Description

### TECHNICAL SECTOR

Relating to the mechanical engineering sector, B64 (Aircraft, aviation):
B64D 5/00 (Attachable equipment to aircraft, for operations carried out during the flight, release or collection of items, aircraft transported by aircraft).

### BACKGROUND OF THE INVENTION

There is no current background or information relating to this topic. The purpose of the invention is to provide a RPA (remotely piloted aircraft) neutralization system by another RPA aircraft, with the capability of entrapment, collection, immobilisation and transport to a pre-established place.

### EXPLANATION OF THE INVENTION

There is a current demand related to security incidents which requires a solution for protection against the threat of attacks with RPA and other types of drone. This invention focuses on the immobilization and neutralization of the RPA type drone, by a **device** that would be anchored to another RPA to intercept and neutralize it. Various protection methods are being studied including the inhibition of RF signals and GPS positioning system. These methods can inhibit the RPA but not control it with total security. The competitive advantage of the proposed invention is that it performs the interception of the RPA threat in a mechanical way, preventing navigation. The neutralizing action is permanent unlike the other methods.

As a solution, this invention is composed of a series of elements that make up the neutralizing device. It can be manufactured in different ways but always fulfilling the same action, which is to catch the propellers of the RPA to neutralize, by winding natural and / or synthetic fibers in the propeller blades. Once the RPA cannot navigate through the entrapment of the blades in the fibers, it is retained up by mechanical arms in a cross-blade position.

The neutralizing device will consist of two systems differentiated by their action.

The first system consists of a set of elements that are designed to catch the propellers of the RPA. It will be composed of two elements, a structural first part (1) made of resistant synthetic materials, which will serve as a framework for the system. And (2), a second element composed of several synthetic and / or natural fibers stacked and joined at one end. This may be varying in number, according to the design needs and will be adaptable to the size of the RPA to be neutralized. They will be connected to a mechanically deployable beam-box (3). The synthetic and/or natural fibers will be resistant to the beating of the propellers and will allow deformity (without reaching the elastic limit) to be able to entangle in the propeller, catching it and slowing down it's turn. This entrapment will allow the device to stop the RPA and become hooked on the same number of points where the fibers are trapped.

The second system of the device will consist of four mechanical arms articulated in two segments (4). They will be activated automatically and almost simultaneously as the entrapment of the RPA in order to neutralize and hold the RPA. They will have a layout of crossed vanes and they will be integral to the structure of the first part.

The two parts will be linked to the neutralizing RPA by a quick coupling mechanism in its ventral part (5).

Based on the above description, the operating procedure of the two systems would be the following:
- Sleep mode: the device will be in sleep mode during the take-off phase and flight until the moment of the interception of the RPA threat when it would go to operational mode. In this rest mode the fibers are in a horizontal position with respect to the device and held at both ends, the drawers are retracted facilitating the flight of the aircraft.
- Operating mode: the device will enter operational mode seconds before the interception of the RPA threat by instructions from the operator, the beam-drawers unfold, thus loosening the fibers that will deploy in the vertical position with respect to the device and fixed at one of its ends.
- Action mode: the device will be in action mode once the fibers make contact with the propellers of the RPA threat, entangling their propellers and slowing them down, the second entrapment system comes into action with articulated arms in the form of a blade. These arms will be activated automatically contact with the ventral part of the device by means of a mechanical spring.

### BRIEF DESCRIPTION OF THE DRAWINGS

To complement the description that is being made and in order to help a better understanding of the characteristics of the invention, a set of drawings are included as an integral part of said description. The drawings are to be considered illustrative and not limiting:

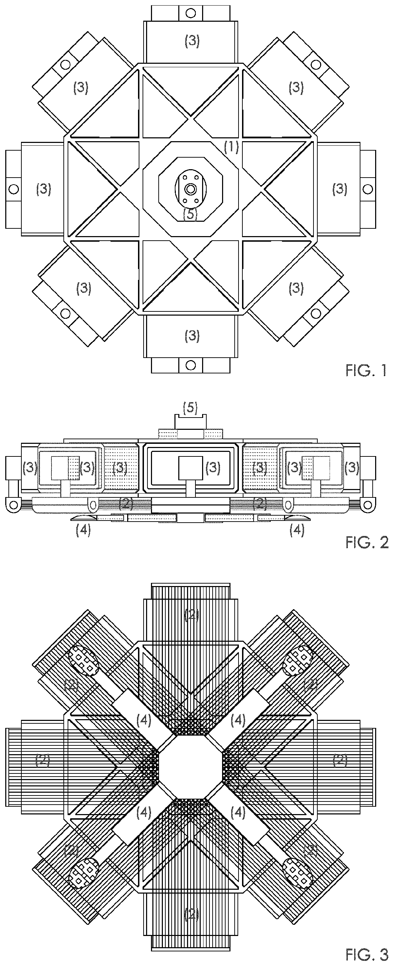

Figure 1 .- Shows a top view / plant of the device of the invention in rest mode, scale 1:10
Figure 2.- Shows a front / elevation view of the device of the invention in rest mode, scale 1:10
Figure 3.- Shows a bottom / ventral view of the device of the invention in rest mode, scale 1:10

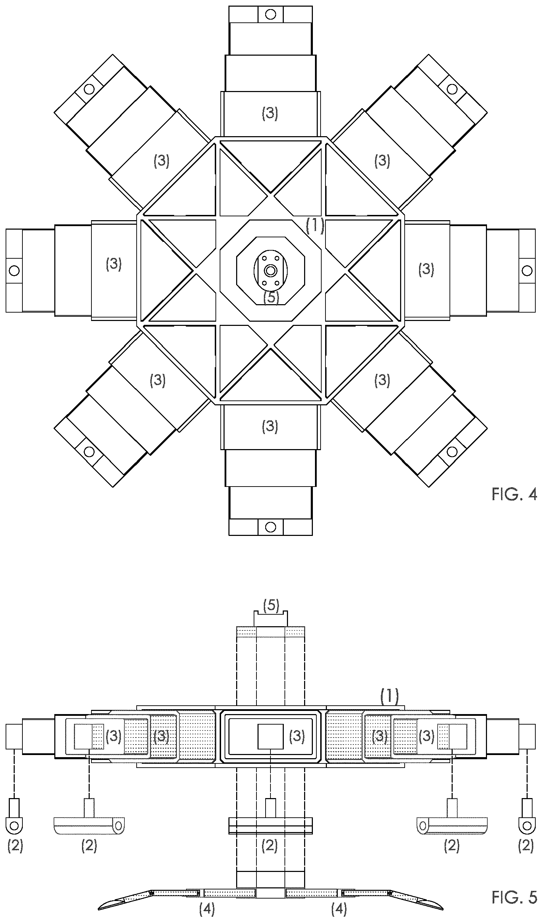

Figure 4 shows a top view / plan of the device of the invention in mode action, scale 1:10
Figure 5.- Shows a front / raised exploded view of the device of the invention in action mode (connector, structure, fibers, arms), scale 1:10

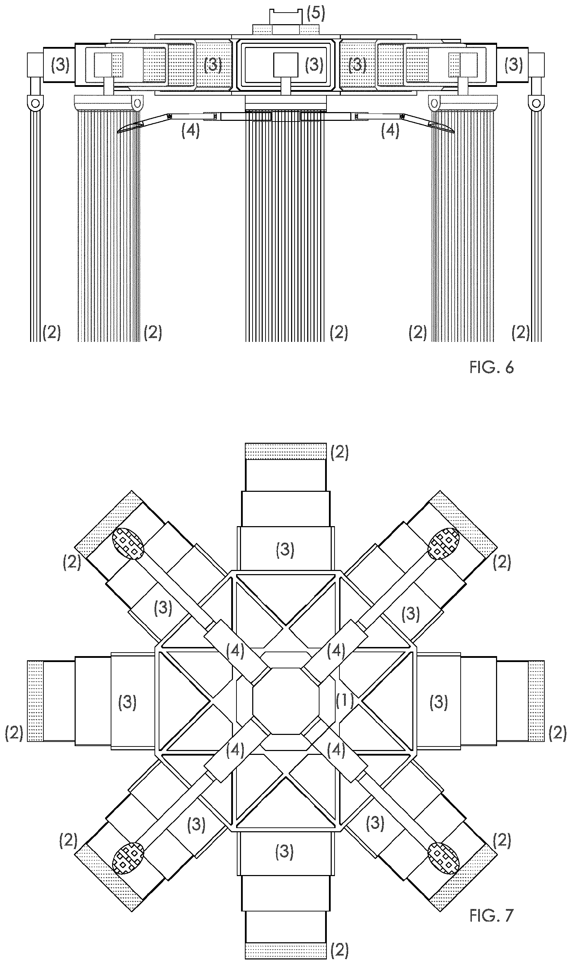

Figure 6 .- Shows a front / elevation view of the device of the invention in action mode, scale 1:10
Figure 7.- Shows a bottom / ventral view of the device of the invention in action mode, scale 1:10
   (1) Structural element, frame where the components are mounted.
   (2) Natural / synthetic fibers joined at one end, may be changed easily in the event of a modular break, it is attached to the element (3) by a connector.
   (3) Before the action of trapping the propellers the Beam-Drawers will mechanically deploy and extend longitudinally. To free the fiber module of the central coupling these will rotate and fall by gravity to the work position.
   (4) Articulated mechanical arms.
   (5) Quick coupling connector with the neutralizing RPA.

### PREFERENCE TO MAKE INVENTION

(1) Structural element: We opt for a hexagonal shape in which the six extendable beam drawers are housed. It will be manufactured in a combination of carbon and Kevlar 49 arimid fiber. The combination of both fibers permit adequate mechanical and resistance characteristics to the impacts. Epoxy resin is to be used for the formation of the composite material. Contact modeling techniques for the pre-impregnated fibers will be used and vacuum assisted and autoclave techniques for the curing phase.
(2) Natural and / or synthetic fibers: These fibers will be housed in a piece of composite material held by one of its ends. At this end there will be an easily exchangeable connector which will connect with the extendable beam-box. The length of the fibers will be 570 mm approximately; this will vary from one model to another depending on the design specifications. This fiber module will have a rotation mechanism to move it from the resting phase to the work phase by disengaging the distal end that will be housed in a central compartment of the structure.
(3) Extendable beam-drawers: There will be a fixed drawer anchored to the structure and two spring loaded extendable drawers that will be remotely activated. They will be made of the same material as the structure, and will housed an engine / servo that will allow the fibers to rotate to the work position. The length of the beam drawers at rest shall be 150 mm and when in the working or extended position be 315 mm. Giving the device a total wingspan, together with the structure, of between 943 mm and 1280 mm approximately. This configuration will be adaptable depending on the size of the threatening RPA. Within the current market there are a great variety of models however they do not usually exceed 1045 mm.
(4) Mechanical articulated arms: They will be manufactured in metal and will be composed of hollow round section. One of the segments will be contained within the other and will have a articulated mechanical spring that when fully extended is bent inward to thereby trap the RPA. At the end of arm will be a grip in the form of a spoon that will serve to increase the contact surface area when gripping the trapped RPA. This grip will be made of a thermostable polymer.
(5) Quick coupling connector: This will be a COTS and compatible with the RPA neutralizer. To manufacture we will use a Ronin® connector that will facilitate the connection with the Drone chosen for its assembly.

This invention is adaptable for industrial usage because it can be manufactured using various shapes and materials, depending on the technical design specifications and the operational needs for which it is intended. What is necessary; is to comply with the basic functions of the invention described above which are to catch the RPA propellers by means of deployed fibers, to neutralize and hold the trapped drone.

## Claims

1. The neutralizing device will consist of two systems differentiated according to their function.
A first system consists of a set of elements whose function is to trap the propellers of the RPA. It will be composed, firstly, of a structural element (1) made of resistant synthetic materials, which will serve as a framework to the system. A second element composed of several synthetic and / or natural fibers stacked and joined at one of its ends (2). It may be of variable number, according to the design needs and it will be adaptable to the scale of the RPA to be neutralized. They will be joined by a connector to a mechanically deployable beam-box (3). The synthetic and / or natural fibers will be resistant to the beating of the propellers and will allow deformation (without reaching the elastic limit) to be able to wind up in the propeller, trapping it and slowing down its rotation. This entrapment will allow the device to brake the RPA and hook in to the same number of points where the fibers are trapped.
The second system of the device will consist of four mechanical arms articulated in two segments (4). They will be activated automatically and almost simultaneously to the entrapment of the RPA to neutralize and hold the RPA. They will be made up of a crossed vanes construction and will be integral to the structural whole of the first part.
The two parts will be joined to the neutralizing RPA by means of a quick coupling mechanism in its ventral part (5).

2. The neutralizing device, as described above will be defined by the filaments trapping the RPA by their propellers, without exceeding the elastic limit of the fibers, in preparation for the second system and ensuring the collection and neutralization of the RPA.
